(19) Europäisches Patentamt
European Patent Office
Office européen des brevets

(11) **EP 3 438 933 B1**

(12) **EUROPEAN PATENT SPECIFICATION**

(45) Date of publication and mention
of the grant of the patent:
**04.10.2023 Bulletin 2023/40**

(21) Application number: **17774248.3**

(22) Date of filing: **14.03.2017**

(51) International Patent Classification (IPC):
**G06V 20/58** *(2022.01)*  **B60Q 1/14** *(2006.01)*
**G06V 10/62** *(2022.01)*  **G06T 7/20** *(2017.01)*

(52) Cooperative Patent Classification (CPC):
**G06V 10/62; B60Q 1/14; G06T 7/20; G06V 20/584;**
G06V 10/40

(86) International application number:
**PCT/JP2017/010054**

(87) International publication number:
**WO 2017/169704 (05.10.2017 Gazette 2017/40)**

(54) **ENVIRONMENT RECOGNITION DEVICE**

UMGEBUNGSERKENNUNGSVORRICHTUNG

DISPOSITIF DE RECONNAISSANCE D'ENVIRONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2016 JP 2016074561**

(43) Date of publication of application:
**06.02.2019 Bulletin 2019/06**

(73) Proprietor: **Hitachi Astemo, Ltd.
Hitachinaka-shi, Ibaraki 312-8503 (JP)**

(72) Inventors:
• **HOTTA Miyako
Tokyo 100-8280 (JP)**
• **DOI Koji
Hitachinaka-shi
Ibaraki 312-8503 (JP)**
• **TAKEMURA Masayuki
Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 600 329**  **EP-A2- 2 575 078**
**EP-A2- 2 840 528**  **JP-A- 2007 076 378**
**JP-A- 2010 254 191**  **JP-A- 2013 163 518**
**JP-A- 2014 232 408**  **JP-A- 2014 232 408**
**US-A1- 2010 289 632**

• **COSMIN D PANTILIE ET AL: "Real-time obstacle
detection using dense stereo vision and dense
optical flow", INTELLIGENT COMPUTER
COMMUNICATION AND PROCESSING (ICCP),
2010 IEEE INTERNATIONAL CONFERENCE ON,
IEEE, PISCATAWAY, NJ, USA, 26 August 2010
(2010-08-26), pages 191-196, XP031778205, ISBN:
978-1-4244-8228-3**

**Description**

Technical Field

The present invention relates to an environment recognition device, for example, an environment recognition device for light distribution control.

Background Art

In order to secure (support) safety on traffic such as at night, the importance of light distribution control that assists a driver in ensuring a visual field by appropriately controlling a headlight depending on the environment in front of a host vehicle has been attracting attention. In the light distribution control, the headlight is set to a high beam when there is no preceding vehicle and oncoming vehicle in front of the vehicle, and the headlight is set to a low beam when there is a preceding vehicle or an oncoming vehicle. In order to implement such light distribution control, a technique has been developed in that light from a vehicle (other vehicle) is detected using an in-vehicle camera mounted at the front of the vehicle and light of the host vehicle is switched to a low beam on the basis of the detected signal.

Incidentally, various lights (also referred to as light spot or point source of light) such as a street light, a traffic light, and a light reflector exist at night as well as a headlight of an oncoming vehicle and a tail light of a preceding vehicle. Accordingly, another technique has been also developed in that the light from other than the vehicle and the headlight/tail light of the vehicle are discriminated to avoid, due to erroneous detection of the light other than the vehicle, erroneously switching the headlight of the host vehicle to the low beam when there is no vehicle. However, especially with respect to the light in a distant place, there has been a problem that it is generally difficult to distinguish the light of the vehicle from the light other than the vehicle from an image of one frame.

In response to such a problem, PTL 1 discloses a conventional technique in which an object candidate is extracted from an image obtained by an in-vehicle imaging device using a pattern shape stored in advance, a changing amount prediction of the extracted object candidate is calculated on the basis of a method of predictively calculating a changing amount of an object differently set for each region among a plurality of regions into which the obtained image is divided, detected host vehicle behavior information, and a position of the object candidate, the object is tracked on the basis of a predicted position of the object, and it is determined whether the object (light spot) is a stationary object on a road on the basis of the result of tracking the object.

More specifically, the in-vehicle environment recognition device and the in-vehicle environment recognition system disclosed in PTL 1 calculate a predicted position of the object candidate (candidate for point source of light) using the host vehicle behavior and the like, and tracks the candidate for the point source of light that exists at a location similar to the predicted position. In this technique, when tracking is established at a location similar to a result of the predictive calculation of the changing amount in each frame in the case of assuming a height on a road surface, it is assumed that the candidate for the point source of light is likely to be a stationary object on the road, thereby determining as a non-moving object.

Citation List

Patent Literature

EP 2 575 078 A2 disclosed a method for detecting a front vehicle comprising: a moving light detecting step of detecting a front moving light area of an own vehicle in at least one image of a front scene of the own vehicle obtained at a time; a vehicle candidate generating step of extracting a light area pair from the detected front moving light area so that a front vehicle candidate is generated; and a vehicle candidate verifying step of verifying that the front vehicle candidate is the front vehicle in cases where the front vehicle candidate meets predetermined characteristics of a vehicle light.

US 2010/289632 A1 discloses a system to display graphical images upon a windscreen of a vehicle including night vision including a transparent wind-screen head up display, a night vision system, and an enhanced Vision system system manager monitoring data from the night Vision system, analyzing the monitored data identifying critical information, and determining display requirements based upon the critical information.

PTL 1: JP 5320331 B2

Summary of Invention

Technical Problem

However, there are various heights of lights such as a street light, a traffic light, and a reflection of a sign, which are erroneously detected as vehicle lights. Accordingly, it is difficult to assume the height of such various lights on the road surface and to discriminate between a non-moving object (stationary light spot) and a moving object (moving light spot).

The present invention has been conceived in view of the above-described problem, and an object of the present invention is to provide an environment recognition device capable of discriminating between a stationary light spot and a moving light spot even in a case where a height of a light spot concerned is unknown.

Solution to Problem

In order to solve the problems described above, an environment recognition device according to the present invention includes a light-spot detection unit that is configured to detect a light spot from each image photographed at a plurality of points in time using an imaging device mounted on a host vehicle, and a moving-light-spot determination unit that is configured to determine, on the basis of variation in positions based on the host vehicle moving amount of light spots determined as identical among the light spots detected from the images photographed at the plurality of points in time, whether the light spot is a light spot moving relative to the ground. A reference generation unit is provided that is configured to generate reference for calculating the variation in positions of light spots using a position of the light spot detected from the image previously photographed by the imaging device. The reference generation unit is configured to calculate a moving amount of the light spot in a predetermined period using the position of the light spot detected from the image previously photographed by the imaging device, and is configured to generate the reference on the basis of the moving amount of the light spot in the predetermined period and a moving amount of the host vehicle in a period same as the predetermined period. Wherein the reference generation unit is configured to calculate the moving amount of the light spot by setting a height of the light spot to a predetermined value and deriving three-dimensional world coordinates from screen coordinates of the light spot on the image using perspective conversion. The reference generation unit is configured to generate the reference on the basis of a correlation between the moving amount of the light spot in the predetermined period and the moving amount of the host vehicle in the period same as the predetermined period. The correlation is represented by a correlation line determined from the moving amount of the light spot in the predetermined period and the moving amount of the host vehicle in the period same as the predetermined period. The correlation with the host vehicle moving amount is maintained without setting the true value to the height at the time of converting from the screen coordinates into the world coordinates.

Advantageous Effects of Invention

According to the present invention, it is determined whether the light spot is a light spot moving relative to the ground on the basis of the variation in the positions of the light spots detected at the plurality of points in time, whereby a stationary light spot and a moving light spot can be efficiently discriminated even in a case where a height of a light spot concerned is unknown.

Problems, configurations, and effects other than those described above will be clarified in the following descriptions of the embodiments.

Brief Description of Drawings

[FIG. 1] FIG. 1 is a block diagram illustrating an internal configuration of an environment recognition device according to a first embodiment of the present invention.
[FIG. 2] FIG. 2 is a block diagram illustrating an internal configuration of a reference generation unit illustrated in FIG. 1.
[FIG. 3] FIG. 3 is a graph illustrating a relationship between a screen coordinate system of an image photographed by a camera and a world coordinate system obtained by converting the screen coordinate system into three dimensions.
[FIG. 4] FIG. 4 is a graph illustrating processing of a light spot moving amount calculation unit illustrated in FIG. 2, and exemplifies a case where a feature point is detected from an image.
[FIG. 5] FIG. 5 is a diagram illustrating a moving amount of a light spot that can be obtained by the camera.
[FIG. 6] FIG. 6 is a graph illustrating an exemplary stationary light spot tracked on a screen.

[FIG. 7] FIG. 7 is a table illustrating an example of screen coordinates of a stationary light spot, X, Y, and Z coordinates as a result of converting the screen coordinates into world coordinates, and a moving amount on the world coordinates.

[FIG. 8] FIG. 8 is a graph illustrating an example in which a relationship between a host vehicle moving amount and a light spot moving amount is plotted with a horizontal axis representing the host vehicle moving amount and a vertical axis representing the light spot moving amount.

[FIG. 9] FIG. 9 is a graph illustrating an example in which two types of light spots are tracked and a relationship between a moving amount of the light spot on world coordinates and the host vehicle moving amount is plotted.

[FIG. 10] FIG. 10 is a table illustrating an example of stored data stored in a light spot reference storage unit illustrated in FIG. 2.

[FIG. 11] FIG. 11 is a flowchart illustrating a process flow of a moving-light-spot determination unit illustrated in FIG. 1.

[FIG. 12] FIG. 12 is a table illustrating a state of stored data stored in the light spot reference storage unit at a point in time (time point t) at which the process of the moving-light-spot determination unit illustrated in FIG. 1 is completed.

[FIG. 13] FIG. 13 is a diagram illustrating processing of a light distribution control unit illustrated in FIG. 1, and illustrates an exemplary image photographed by the camera at the time point t.

[FIG. 14] FIG. 14 is another diagram illustrating the processing of the light distribution control unit illustrated in FIG. 1, and illustrates an exemplary image photographed by the camera at a time point t + 1.

[FIG. 15] FIG. 15 is a table illustrating the processing of the light distribution control unit illustrated in FIG. 1, and illustrates a state of stored data stored in the light spot reference storage unit at the point in time (time point t + 1) at which the process of the moving-light-spot determination unit is completed.

[FIG. 16] FIG. 16 is a block diagram illustrating an internal configuration of an environment recognition device according to a second embodiment of the present invention.

[FIG. 17] FIG. 17 is a block diagram illustrating an internal configuration of a distance measurement reliability determination unit illustrated in FIG. 16.

[FIG. 18] FIG. 18 is a table illustrating an example of stored data stored in a light spot position information storage unit illustrated in FIG. 17.

[FIG. 19] FIG. 19 is a graph illustrating a principle of a light spot height variation determination unit illustrated in FIG. 17.

[FIG. 20] FIG. 20 is a table illustrating an exemplary result of determining reliability from magnitude of variation in the light spot height variation determination unit illustrated in FIG. 17.

## Description of Embodiments

Hereinafter, embodiments of the present invention will be described with reference to the accompanying drawings.

In the following descriptions, a case where, in order to control (light distribution control and headlight control) a light distribution state of a vehicle in which an environment recognition device according to the present invention is mounted, an object (light spot and point source of light) in front of the host vehicle is detected by a camera as an imaging device disposed to face the front to image the front of the vehicle will be described. Meanwhile, it should be noted that the present invention can also be applied to a case where an object behind or at the side of the host vehicle is detected.

[First Embodiment]

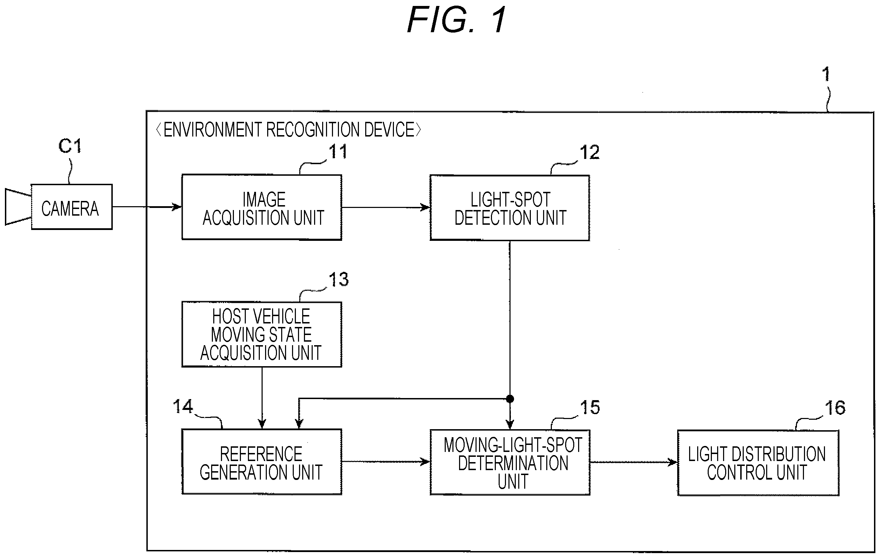

FIG. 1 is a block diagram illustrating an internal configuration of an environment recognition device according to a first embodiment of the present invention.

As illustrated in the drawing, an environment recognition device 1 basically includes an image acquisition unit 11, a light-spot detection unit 12, a host vehicle moving state acquisition unit 13, a reference generation unit 14, a moving-light-spot determination unit 15, and a light distribution control unit 16.

The image acquisition unit 11 periodically (in a time series manner) obtains, from a camera (monocular camera) C1 installed at the front of a vehicle, for example, an image in front of the vehicle (host vehicle).

The light-spot detection unit 12 detects, from the image obtained by the image acquisition unit 11, information associated with a light spot included in the image. The light-spot detection unit 12 detects the light spot from the obtained image by, for example, extracting a high luminance region by performing binarization with an appropriate threshold value. Further, since the environment recognition device 1 detects both a preceding vehicle (tail light) and an oncoming vehicle (headlight), the light spot is detected by extracting, in addition to the high luminance region, a red region while color image information is used.

With respect to the extracted region, the light-spot detection unit 12 obtains information associated with coordinates of a circumscribed rectangle of the region, an area of a high luminance pixel in the extracted region, luminance, and the like. With respect to the luminance, a representative value such as an average value, a maximum value, and a minimum value in the entire region is included.

The host vehicle moving state acquisition unit 13 obtains information associated with a running state, which is obtained from various sensors for measuring a running state of the host vehicle, at every unit time (periodically). Any information may be used as the information to be obtained as long as it is a parameter capable of calculating a distance (moving amount) through which the host vehicle has moved, examples of which include a speed obtained from a vehicle speed sensor, a steering angle of a steering wheel obtained from a steering angle sensor, and a yaw rate obtained from a yaw rate sensor.

The reference generation unit 14 generates reference for determining whether the detected light spot is moving relative to the ground (or whether the detected light spot is stationary relative to the ground) using the information associated with the light spot detected by the light-spot detection unit 12 at the plurality of points in time (that is, from each image photographed at the plurality of points in time) and the information associated with the running state of the host vehicle obtained by the host vehicle moving state acquisition unit 13.

In the present embodiment, a moving amount on world coordinates is estimated from a movement of the light spot on screen coordinates of the image, and an average of relative values between the moving amount of the light spot (light spot moving amount) and the moving amount of the host vehicle (host vehicle moving amount) is generated as reference (to be described in detail later).

The moving-light-spot determination unit 15 determines whether each light spot in the image detected by the light-spot detection unit 12 is a moving light spot (light spot moving relative to the ground) or a stationary light spot (light spot stationary relative to the ground) on the basis of the reference generated by the reference generation unit 14.

The light distribution control unit 16 determines light distribution control for determining whether to make a headlight of the host vehicle a high beam or a low beam on the basis of the determination result (whether the detected light spot is a moving light spot or a stationary light spot) of the moving-light-spot determination unit 15. IN the light distribution control here, the headlight of the host vehicle is set to a high beam normally, and when a tail light of a preceding vehicle, a headlight of an oncoming vehicle, or the like is detected, the headlight of the host vehicle is switched to a low beam so as not to bother a driver of the other vehicle. Therefore, the light distribution control unit 16 sets the light distribution state to a low beam when there is at least one light spot determined as a moving light spot by the moving-light-spot determination unit 15. On the other hand, when there is no light spot determined as a moving light spot by the moving-light-spot determination unit 15 (in other words, only when all light spots are determined as stationary light spots by the moving-light-spot determination unit 15), switching from the low beam to the high beam is permitted.

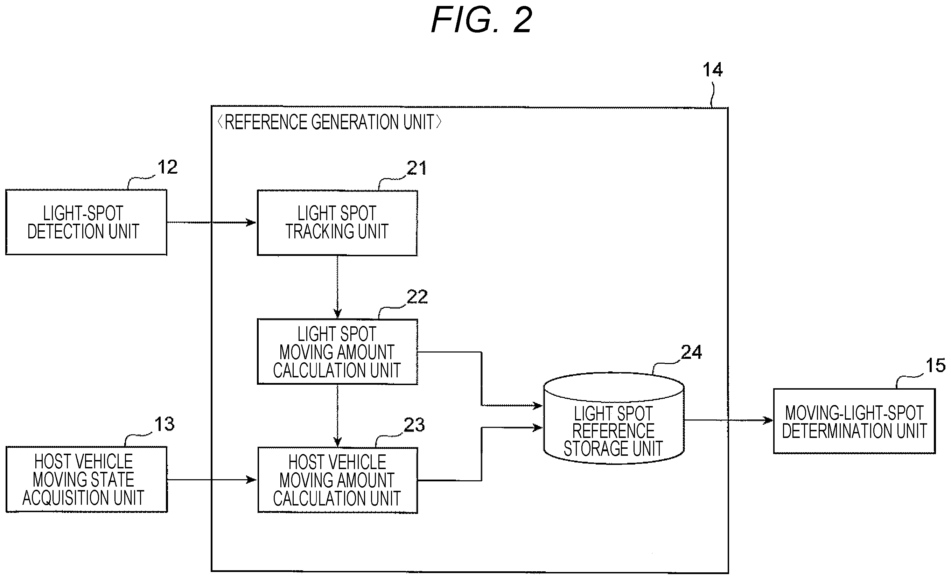

Next, the reference generation unit 14, the moving-light-spot determination unit 15, and the light distribution control unit 16, which are characteristic parts of the environment recognition device 1 according to the present invention, will be described in detail with reference to FIGS. 2 to 14.

<Reference Generation Unit>

As illustrated in FIG. 2, the reference generation unit 14 mainly includes a light spot tracking unit 21, a light spot moving amount calculation unit 22, a host vehicle moving amount calculation unit 23, and a light spot reference storage unit 24.

The light spot tracking unit 21 determines an identical light spot by matching with respect to each of a plurality of light spots detected by the light-spot detection unit 12 (in an image photographed at) a certain time point t and (in an image photographed at) the next time point t + 1. Various methods of the matching may be used as long as a moving locus of the light spot can be obtained. For example, when an image acquisition cycle is short, a method of matching the light spot at the closest position on the image may be used. Further, there is another method of matching in which a moving position is predicted on the basis of a moving direction and a moving distance on the image obtained from past tracking processing and the light spot closest to the predicted position is matched. Furthermore, as disclosed in PTL 1, there is still another method of matching in which the moving amount of the next time point on the world coordinates is determined on the basis of a moving state of a host vehicle, a predicted position is determined by converting the moving amount into a position on the image using perspective conversion, and the light spot closest to the predicted position is matched.

The light spot moving amount calculation unit 22 estimates the moving amount of the light spot on the world coordinates on the basis of the moving locus of the light spot (light spot determined as identical) on the image obtained by a tracking result of the light spot tracking unit 21.

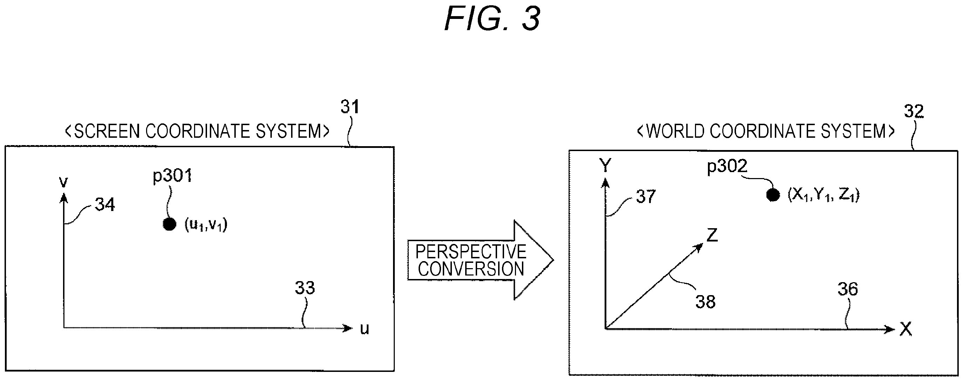

A method of estimating the light spot moving amount by the light spot moving amount calculation unit 22 will be described with reference to FIG. 3. A screen coordinate system of an image photographed by the in-vehicle camera C1 is denoted by 31 in FIG. 3, which is represented by two-dimensional coordinates of a horizontal axis u denoted by 33 and a vertical axis v denoted by 34. A world coordinate system obtained by converting the screen coordinate system 31 into three dimensions is denoted by 32 in FIG. 3, which is represented by a horizontal axis X denoted by 36, a vertical axis Y denoted by 37, and a depth axis Z denoted by 38.

When a point $(u_1, v_1)$ represented by p301 on the screen coordinate system 31 is converted into a point $(X_1,$

$Y_1$, $Z_1$) represented by p302 on the world coordinate system 32, the following Formula (1) is established.

$$\text{(Mathematical Formula 1)} \quad Z_1 = (fy * Y_1)/(v_1 - Vpy) \quad X_1 = ((u_1-Vpx) * Z_1)/fx \quad \dots \quad (1)$$

where fx, fy: focal length [pixel] (Vpx, Vpy): vanishing point coordinates

The focal length and the vanishing point coordinates are values uniquely determined as internal parameters of the camera. The moving distance on the assumption of a height can be estimated by converting the screen coordinates (system) for each time point to the world coordinates (system) using Formula (1).

In Formula (1), $Y_1$ representing the height of the point on the world coordinates cannot be determined from the position of the light spot on the image detected by the light-spot detection unit 12. This is assumed to be an appropriate predetermined value, such as 1, to perform calculation. The reason for performing calculation by assuming $Y_1$ will be described in detail later.

The light spot moving amount calculation unit 22 converts the coordinates of the light spot tracked by the light spot tracking unit 21 on the image into the world coordinates and calculates the distance on the world coordinates, thereby calculating the moving amount between the tracked light spots.

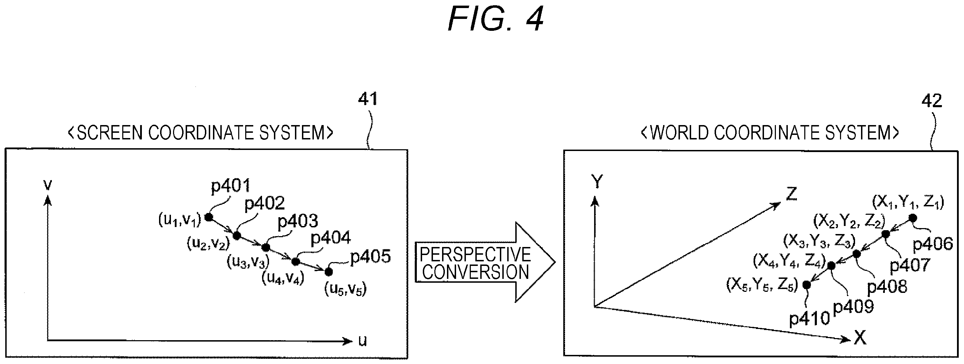

FIG. 4 is a graph illustrating processing of the light spot moving amount calculation unit 22. On a screen coordinate system denoted by 41, light spots on the image are detected by the light spot tracking unit 21 in an order of p401, p402, p403, p404, and p405. Although these positions are respectively detected in images at different time points, they are illustrated on the same image for convenience of explanation. The positions on the screen coordinate system are converted into positions p406, p407, p408, p409, and p410 on the world coordinate system denoted by 42 using Formula (1). Once each position on the world coordinates is determined, the moving amount can be determined from the coordinates before and after the light spot.

The host vehicle moving amount calculation unit 23 calculates, from the information associated with the running state of the host vehicle obtained by the host vehicle moving state acquisition unit 3, the moving amount of the host vehicle in the period same as the period in which the moving amount is calculated by the light spot moving amount calculation unit 22.

The method of calculating the moving amount of the host vehicle depends on the content of information that can be obtained by the host vehicle moving state acquisition unit 13. In this case, a vehicle speed $v$ (m/sec) and a yaw rate $\rho$ (deg/sec) for each cycle $\Delta t$ (sec) can be obtained.

A moving amount L between the cycles $\Delta t$ is obtained by the following Formula (2).

$$\theta = \Delta t * \rho$$
$$\Delta X = \Delta t * v * \sin\theta$$
$$\Delta Z = \Delta t * v * \cos\theta$$
$$L = \sqrt{\Delta X^2 + \Delta Z^2} \qquad \dots \quad (2)$$

where $\theta$: movement angle

$\Delta X$: movement amount in X direction
$\Delta Y$: movement amount in Z direction
(Mathematical Formula 2)

The light spot moving amount calculation unit 22 and the host vehicle moving amount calculation unit 23 store the calculated moving amounts (light spot moving amount and host vehicle moving amount) together with a time index in the light spot moving amount calculation unit 22 and the host vehicle moving amount calculation unit 23 so that the moving amounts can be referred to using time.

The light spot reference storage unit 24 stores the reference generated on the basis of the light spot moving amount calculated by the light spot moving amount calculation unit 22 and the host vehicle moving amount calculated by the host vehicle moving amount calculation unit 23.

Here, a principle of the reference stored in the light spot reference storage unit 24 and a method of generating the reference will be described.

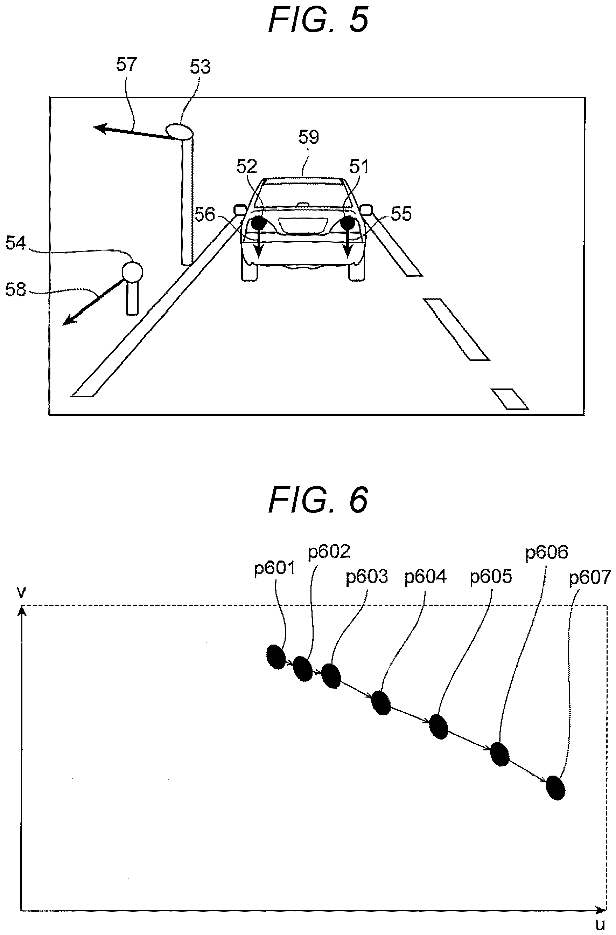

FIG. 5 is a diagram illustrating the moving amount of the light spot that can be obtained by the camera C1, which illustrates the image obtained by the in-vehicle camera C1 mounted on a running vehicle. In the drawing, light spots of a tail light of a preceding vehicle 59 are denoted by 51 and 52, a light spot of a street light on the roadside is denoted by 53, and a light spot of a light reflector on the roadside is denoted by 54. It is assumed that the image is photographed at the time point t, and movement destinations (directions and sizes) of the light spots 51, 52, 53, and 54 on the image photographed at the time point t + 1 in the next cycle are denoted by movement vectors 55, 56, 57, and 58, respectively.

Assuming that the moving amount of the host vehicle between the time point t and the time point t + 1 is Lown and the moving amount of the preceding vehicle 59 is L59, a moving amount L55 of the vector 55 in the world coordinates conversion, a moving amount L56 of the vector 56 in the world coordinates conversion, a moving amount L57 of the vector 57 in the world coordinates conversion, and a moving amount L58 of the vector 58 in the world coordinates conversion are each expressed by the following Formula (3).

$$(\text{Mathematical Formula 3}) \quad L55 = Lown - L59 \quad L56 = Lown - L59$$

$$L57 = Lown \quad L58 = Lown \quad ... \quad (3)$$

That is, the moving amount of the light spot 53 of the street light or the light spot 54 of the light reflector, which is a stationary object, coincides with the moving amount Lown of the host vehicle. Meanwhile, the moving amount of the light spots 51 and 52 of the light of the preceding vehicle, which are moving objects, is an amount obtained by adding or subtracting the moving amount of the object (moving object) to or from the moving amount Lown of the host vehicle.

Accordingly, when the moving amount of the detected light spot on the world coordinates can be actually measured, it can be discriminated whether the light spot is moving or stationary. Here, when Formula (1) to be used for the calculation in the light spot moving amount calculation unit 22 is referred to, the height $Y_1$ is required to convert the screen coordinates $(u_1, v_1)$ into the world coordinates $(X_1, Y_1, Z_1)$. However, since information associated with the height of the light spot cannot be obtained from the screen coordinates of one shot, an absolute value of the moving amount cannot be calculated.

Meanwhile, when Formula (1) is referred to, the height $Y_1$ of the converted object is a value effective for a multiplication in the formula (upper formula of Formula (1)) for calculating the depth $Z_1$ on the world coordinates. Therefore, even when an accurate height cannot be obtained, the ratio between the moving amount calculated by assuming the height to an appropriate value and the moving amount calculated with the accurate height is constant.

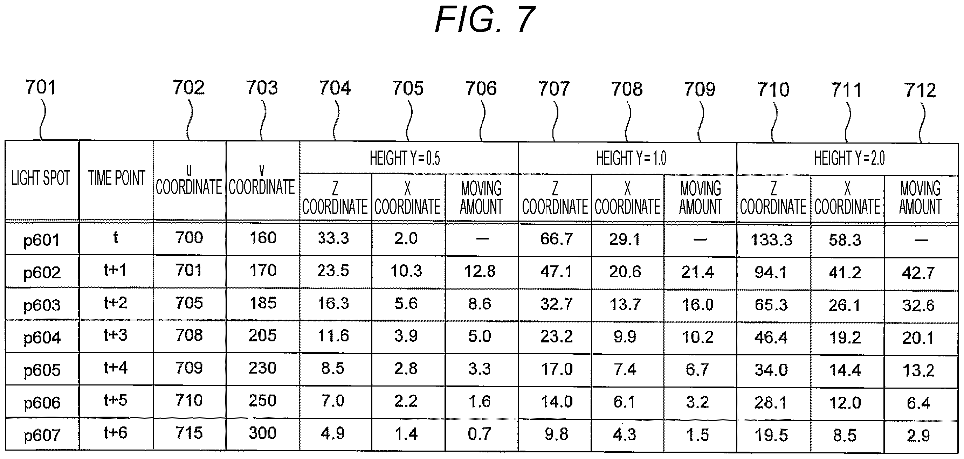

FIG. 6 illustrates an exemplary stationary light spot tracked on a screen (image). For convenience of explanation, in this case, the positions of the light spots in a plurality of frames are denoted by reference signs p601 to p607 in the same image. FIG. 7 illustrates an example of screen coordinates of the stationary light spots p601 to p607, X, Y, and Z coordinates as a result of converting the screen coordinates into the world coordinates using Formula (1), and the moving amount on the world coordinates.

The reference signs of the light spots p601 to p607 illustrated in FIG. 6 correspond to a column 701 in FIG. 7. The Z and X coordinates on the world coordinates are calculated on the basis of the coordinates on the screen of columns 702 and 703. In FIG. 7, columns 704, 705, and 706 are the results of conversion of the Z and X coordinates and the moving amount calculated with the height Y set to 0.5, columns 707, 708, and 709 are the results of conversion of the Z and X coordinates and the moving amount calculated with the height Y set to 1.0, and columns 710, 711, and 712 are the results of conversion of the Z and X coordinates and the moving amount calculated with the height Y set to 2.0. Here, focal lengths fx and fy and vanishing point coordinates Vpx and Vpy are set to a constant value. Besides, the moving amounts of the column 706, the column 709, and the column 712 are calculated from the Z coordinate and the X coordinate of the light spot of a continuous time series.

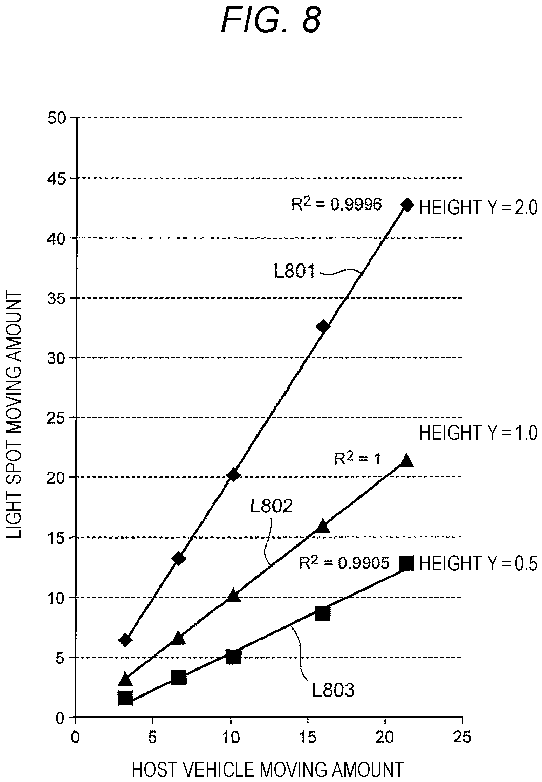

It is assumed that, on the basis of the moving amount calculated in FIG. 7, the height Y = 1.0 is a true value, and the calculated moving amount coincides with the actual moving amount of the light spot in the case of Y = 1.0. As a result of this, FIG. 8 is a graph in which a relationship between the host vehicle moving amount and the light spot moving amount is plotted with a horizontal axis representing the host vehicle moving amount and a vertical axis representing the light spot moving amount.

A correlation equation for the plot of the light spot moving amount and the host vehicle moving amount when the height Y of the light spot is 1.0 is illustrated in L802. As it coincides, the inclination (correlation coefficient) of the correlation equation (correlation line) is 1. With respect to a correlation equation L801 in which the height Y is set to 2.0 and a correlation equation L803 in which the height Y is set to 0.5 as well, a correlation coefficient is around 1, which shows correlation. Accordingly, it is considered that the correlation with the host vehicle moving amount is maintained without setting the true value to the height at the time of converting from the screen coordinates into the world coordinates.

From the above, by observing the variation of the ratio of the light spot moving amount based on the host vehicle moving amount (or, to the contrary, ratio of the host vehicle moving amount based on the light spot moving amount), it can be determined as a stationary object (stationary light spot) (in other words, stationary object in which the moving amount thereof coincides with that of the host vehicle (moving amount in the opposite direction)) stationary relative to the ground when the variation is small, and as a moving object (moving light spot) (moving object in which the moving amount thereof is different from that of the host vehicle) moving relative to the ground when the variation is large.

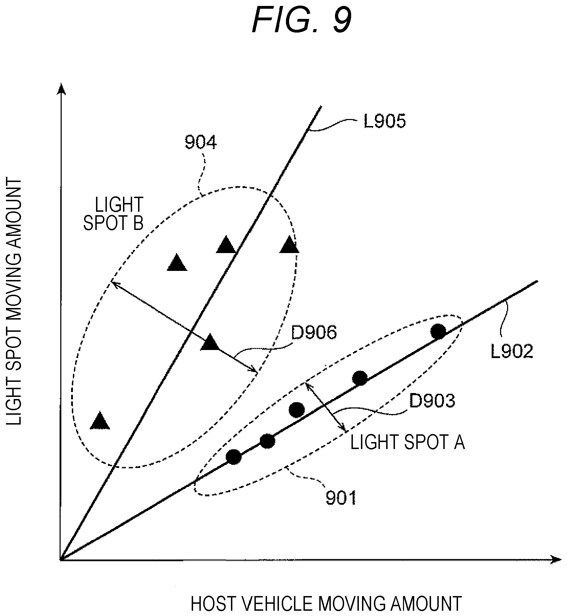

FIG. 9 illustrates an example in which two types of light spots are tracked and a relationship between the light spot moving amount on the world coordinates and the host vehicle moving amount is plotted. In the drawing, distribution of the moving amount of a light spot A relative to the host vehicle moving amount is denoted by 901, and distribution of the moving amount of a light spot B relative to the host vehicle moving amount is denoted by 904. A correlation equation relative to the distribution 901 is denoted by L902, and magnitude of variation relative to the correlation equation L902 is denoted by D903. A correlation equation relative to the distribution 904 is denoted by L905, and magnitude of variation relative to the correlation equation L905 is denoted by D906.

Here, the light spot having a small variation relative to the correlation equation like the light spot A may be defined as a stationary light spot, and the light spot having a large variation relative to the correlation equation like the light spot B may be defined as a moving light spot.

The reference stored in the light spot reference storage unit 24 illustrated in FIG. 2 is reference for describing the correlation between the host vehicle moving amount and the light spot moving amount. Therefore, the light spot reference storage unit 24 stores, as reference for each time point, a ratio obtained by dividing the light spot moving amount calculated by the light spot moving amount calculation unit 22 for each time point by the host vehicle moving amount in the same period calculated by the host vehicle moving amount calculation unit 23, as expressed by the following Formula (4).

$$(Mathematical\ Formula\ 4)\ Reference = Light\ spot\ moving$$

$$amount/Host\ vehicle\ moving\ amount\ \ ...\ (4)$$

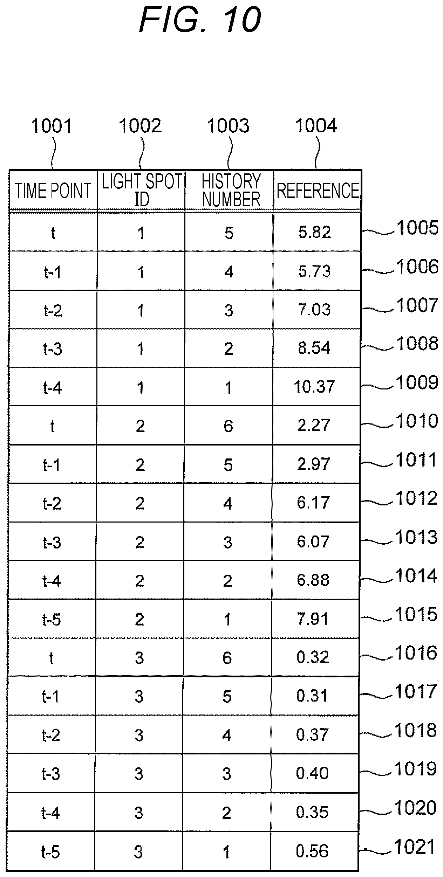

FIG. 10 illustrates an example of stored data stored in the light spot reference storage unit 24. A column 1001 indicates a time point at which the reference is calculated. A column 1002 indicates an ID for uniquely specifying the light spot for calculating the reference. A column 1003 indicates the number of histories, which represents the number of tracking the light spot by the light spot tracking unit 21. A column 1004 indicates the reference, which is calculated from the moving amount of the light spot obtained at a current time point and the host vehicle moving amount during the same period using Formula (4) mentioned above.

<Moving-light-spot determination unit>

Next, the moving-light-spot determination unit 15 illustrated in FIG. 1 determines, as described above, whether each light spot in the image detected by the light-spot detection unit 12 is a moving light spot or a stationary light spot on the basis of the reference generated by the reference generation unit 14.

For example, a case where reference (light spot moving amount/host vehicle moving amount) Bn in a period (cycle) of a time $N + 1$ from the time point t to the time point $t + N$ with respect to a certain light spot in the image is stored in the light spot reference storage unit 24 of the reference generation unit 14 will be described as an example.

First, the moving-light-spot determination unit 15 calculates an average value m in period of the time $N + 1$ (hereinafter may be referred to as reference average value) with respect to the reference Bn (Bn: reference for time point n) of the light spot determined as identical, as expressed by the following Formula (5).

$$m = \frac{\sum_{n=t}^{t+N} Bn}{N+1} \qquad \cdots\ (5)$$

(Mathematical Formula 5)

Then, the moving-light-spot determination unit 15 calculates variance V (hereinafter may be referred to as reference variance) of the reference Bn on the basis of the average value m, as expressed by the following Formula (6).

$$V = \frac{\sum_{n=t}^{t+N} (Bn - m)}{N+1} \qquad \cdots\ (6)$$

(Mathematical Formula 6)

As described with reference to FIG. 9, when the variance V of the reference is small, the ratio of the light spot moving amount relative to the host vehicle moving amount is constant as indicated by 901, which is on the correlation line L902. On the other hand, when the variance V of the reference is large, variation of the ratio of the light spot moving amount relative to the host vehicle moving amount increases, and variation relative to the correlation line L905 also increases, as indicated by the distribution D906.

In order to discriminate this difference, a threshold value is set in advance, and the light spot is determined as a stationary light spot when the variance V of the reference is less than the threshold value while the light spot is determined as a moving light spot when the variance V is equal to or more than the threshold value.

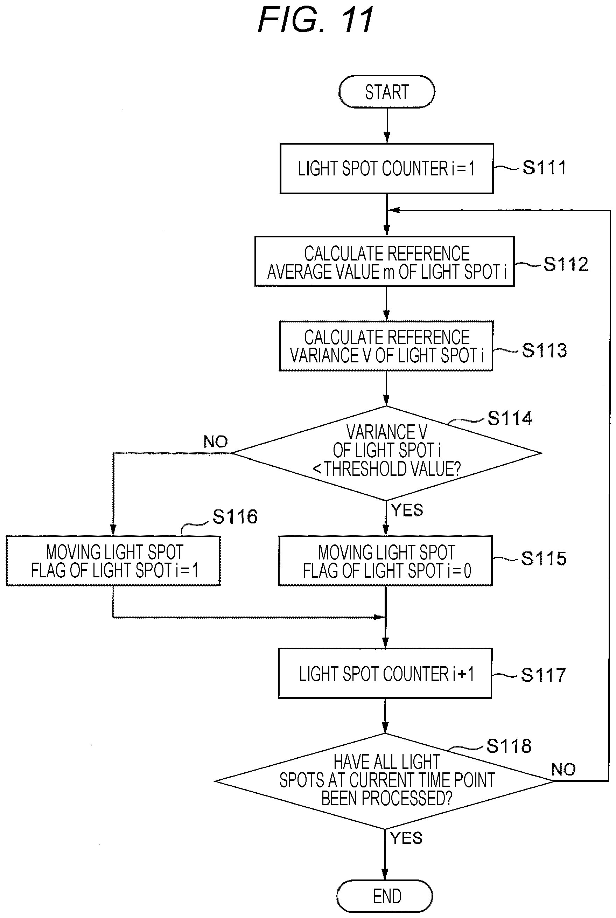

FIG. 11 illustrates a process flow performed by the moving-light-spot determination unit 15. The process flow performed by the moving-light-spot determination unit 15 will be described in a sequenced manner using FIG. 10. In this case, it is assumed that a current time is t and a threshold value for distinguishing the stationary light spot and the moving light spot is 0.5.

First, in S111, a light spot counter is initialized to 1.

In S112, the reference average value m of a light spot i is calculated. Data associated with the light spot i is extracted from the light spot reference storage unit 24 illustrated in FIG. 10, and the average value is referred to. As an initial value of the light spot counter is 1, data with a light spot ID "1" in the column 1002 is referred to. The data with the light spot ID "1" at the current time point t is in a row 1005, and the number of histories is "5". Therefore, five pieces of data with the light spot ID "1" including the above-mentioned data are sequentially referred to from the top of the data rows, thereby obtaining the reference. In the example illustrated in FIG. 10, five pieces of data in the rows 1005, 1006, 1007, 1008, and 1009 are obtained as the data of the light spot ID "1", and the average value m = 7.5 is calculated from the five pieces of data.

In S113, the reference variance V of a light spot i is calculated. In a similar manner to the average value calculation in S112, the data with the light spot ID "1" is obtained and the variance V = 3.87 is calculated using Formula (6) mentioned above as well as the average value m calculated in S112.

In S114, the variance V of the light spot i calculated in S113 is compared with a predetermined threshold value. When the variance V is smaller than the threshold value, the light spot i is determined as a stationary light spot, and the process proceeds to S115. When the variance V is larger than the threshold value, the light spot i is determined as a moving light spot, and the process proceeds to S116. In the case of the light spot ID "1", the variance V = 3.87 is larger than the threshold value 0.5. Therefore, it is determined as a moving light spot and the process proceeds to S116.

In S115, when it is determined as a stationary light spot, a moving light spot flag of the light spot i is set to 0.

In S116, when it is determined as a moving light spot, the moving light spot flag of the light spot i is set to 1.

In S117, the light spot counter i is advanced by 1. In this case, the light spot ID is set to "2".

In step S118, it is determined whether all the light spots at the current time point t have been processed. When it is determined that all the light spots at the current time point t have been processed, all determination processing with respect to all the light spots existing at the time point is considered to have been completed, and the processing of the moving-light-spot determination unit 15 is terminated. On the other hand, when it is determined that all the light spots at the current time point t have not been processed, the process returns to step S112, and the subsequent processing after S112 is also executed. In this case, as the light spot ID is "2", the process returns to S112, and data in rows 1010, 1011, 1012, 1013, 1014, and 1015 as data of the light spot ID "2" is obtained from the light spot reference storage unit 24 illustrated in FIG. 10, thereby executing average value calculation processing and the like. Similarly, data in rows 1016, 1017, 1018, 1019, 1020, and 1021 as data of the light spot ID "3" is obtained from the light spot reference storage unit 24 illustrated in FIG. 10, thereby executing the average value calculation processing and the like.

The processing result of the moving-light-spot determination unit 15 is stored in the light spot reference storage unit 24 of the reference generation unit 14 together with the reference.

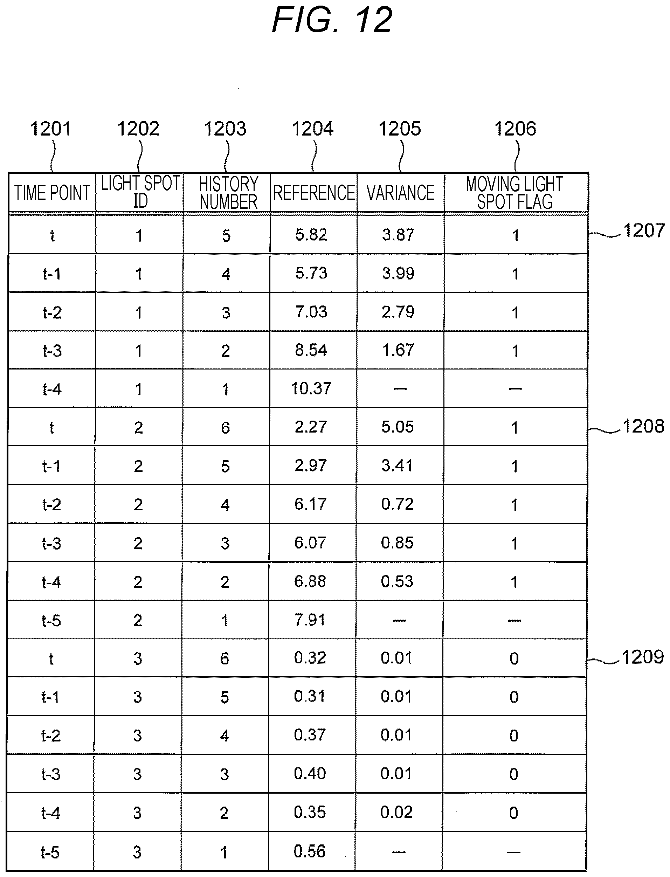

FIG. 12 illustrates a state of stored data stored in the light spot reference storage unit 24 at the point in time when the process of the moving-light-spot determination unit 15 is completed. In addition to the table illustrated in FIG. 10, the variance for each light spot and the moving light spot flag after the threshold value determination processing are added to a column 1205 and a column 1206, respectively.

By this processing, history data of the reference of the light spot existing at the current time point is referred to, and the variance thereof is calculated, whereby the moving-light-spot determination unit 15 can determine whether each light spot in the image is a moving light spot or a stationary light spot.

<Light Distribution Control Unit>

Subsequently, the light distribution control unit 16 illustrated in FIG. 1 determines, as described above, a light distribution state of the headlight of the host vehicle on the basis of the determination result (whether the detected light spot is a moving light spot or a stationary light spot) of the moving-light-spot determination unit 15. That is, the light distribution state is set to the low beam when it is determined as a moving light spot by the moving-light-spot determination unit 15 and there is at least one light spot having a moving light spot flag set to "1". On the other hand, when there is no light spot determined as a moving light spot by the moving-light-spot determination unit 15 (in other words, when all light spots are determined as stationary light spots by the moving-light-spot determination unit 15) and the moving light spot flags of all light spots are set to "0", switching from the low beam to the high beam is permitted.

This process of the light distribution control unit 16 will be specifically described with reference to FIGS. 12 to 15.

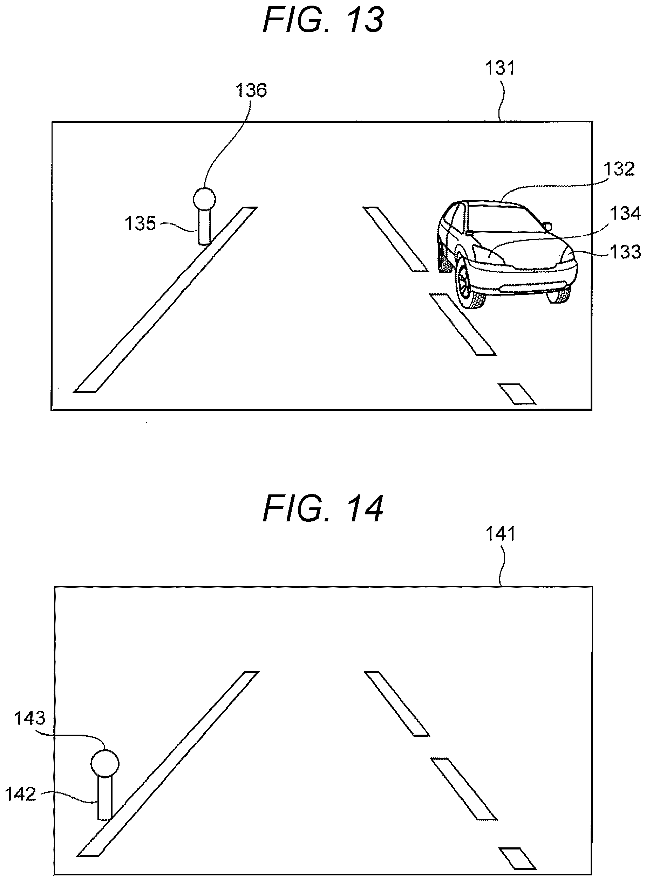

FIG. 13 is an image 131 photographed by the in-vehicle camera C1 at the time point t, and a vehicle (oncoming vehicle) 132 and a light reflector 135 are reflected in the image 131. In the image 131, it is assumed that the detected light spots are light spots 133 and 134 that are light of the vehicle 132, and a light spot 136 of the light reflector 134. A result indicating how these light spots are determined by the moving-light-spot determination unit 15 is illustrated in FIG. 12 described above. The light spot 133 in FIG. 13 is the light spot with the light spot ID "1" in FIG. 12, the light spot 134 in FIG. 13 is the light spot with the light spot ID "2" in FIG. 12, and the light spot 136 in FIG. 13 is the light spot with the light spot ID "3" in FIG. 12. When the light spot existing at the time point t is referred to in FIG. 12, the moving light spot flag with the light spot ID "1" in a row 1207 and the moving light spot flag with the light spot ID "2" in a row 1208 are set to "1". Therefore, it is determined that the light of the vehicle exists, and in this case, the light distribution control unit 16 controls (switches) the light distribution state of the host vehicle to the low beam.

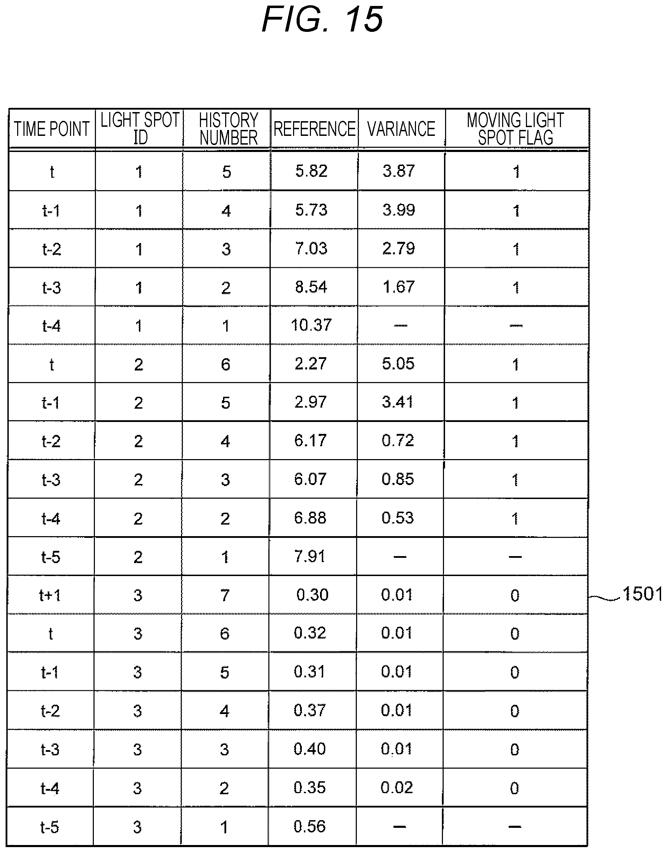

Besides, FIG. 14 is an image 141 photographed by the in-vehicle camera C1 at the time point t + 1, and a light reflector 142 is reflected in the image 141. In the image 141, it is assumed that the detected light spot is a light spot 143 of the light reflector 142. FIG. 15 illustrates a state of stored data stored in the light spot reference storage unit 24 reflecting the result determined by the moving-light-spot determination unit 15 with respect to this light spot. The light spot 143 in FIG. 14 is the light spot with the light spot ID "3" in FIG. 15. When the light spot existing at the time point t + 1 is referred to in FIG. 15, the moving light spot flag with the light spot ID "3" in a row 1501 is set to "0". Since this light spot is determined as a stationary light spot, in this case, the light distribution control unit 16 controls the light distribution state of the host vehicle to the high beam.

In this manner, as the moving-light-spot determination unit 15 determines whether the light spot included in the image is a moving light spot or a stationary light spot, even in a case where a light spot is detected, when it is determined that the detected light spot is not a moving light spot (that is, not a light of a moving vehicle), the light distribution control unit 16 sets the light distribution state to the high beam, whereby erroneous control in which the light spot other than the vehicle, such as a street light and a light reflector, is erroneously detected and the light distribution state is set (switched) to the low beam can be prevented.

In the embodiment described above, the exemplary case where the existence/non-existence of the moving light spot is determined and the light distribution state is switched has been described. Here, when it is determined that the high beam/low beam of the host vehicle is switched according to the determination of the light distribution control unit 16, control for delaying switching for several frames may be added. As a result, when an erroneous detection such as instantaneous presence of a moving object occurs, improper operation such as frequent switching of the light distribution state can be prevented.

As can be understood from the descriptions above, with the environment recognition device 1 according to the present embodiment, it is determined whether the light spot is a light spot moving relative to the ground on the basis of the variation in the positions of the light spots detected at the plurality of points in time, whereby a stationary light spot and a moving light spot can be efficiently discriminated even in a case where a height of a light spot concerned is unknown (that is, even in a case where the actual accurate moving amount of the light spot cannot be measured).

[Second Embodiment]

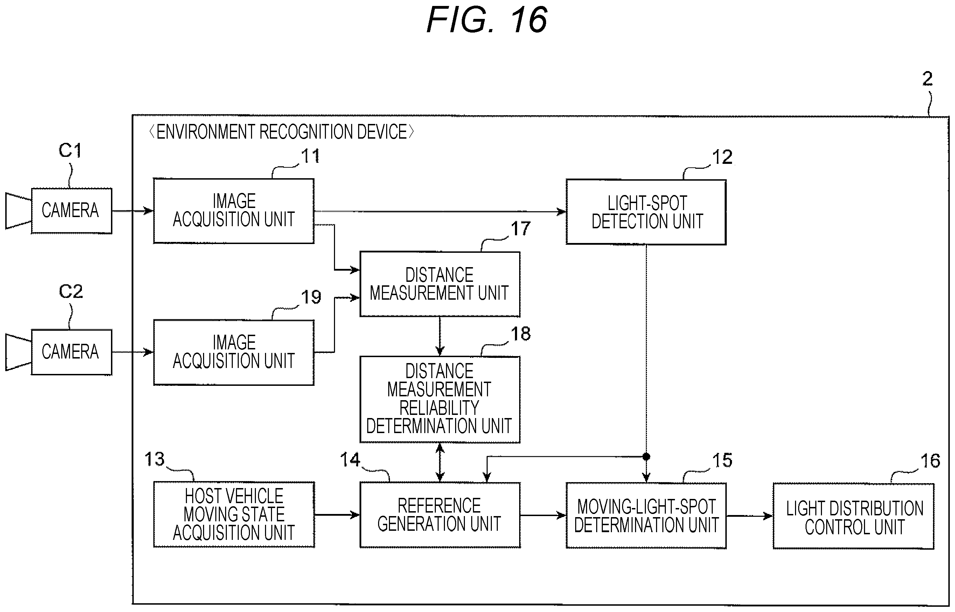

FIG. 16 is a block diagram illustrating an internal configuration of an environment recognition device according to a second embodiment of the present invention.

An environment recognition device 2 according to the second embodiment illustrated in FIG. 16 is a device in which, mainly, a distance measurement unit 17 and a distance measurement reliability determination unit 18 are added to the environment recognition device 1 according to the first embodiment illustrated in FIG. 1. Specifically, a means capable of measuring a distance to a light spot reflected on a camera image is added to the configuration according to the first embodiment, and when reliability of the measured distance is high, a light spot moving amount calculated by a reference generation unit 14 is replaced with a light spot moving amount calculated on the basis of the distance measured by the distance measurement unit 17, which is a configuration added to the configuration according to the first embodiment. Other configurations are substantially the same. Therefore, the configurations same as those in the first embodiment will be denoted by similar reference signs and detailed descriptions thereof will be omitted. Hereinafter, only the differences will be described in detail.

In the following descriptions, a case where the distance to the light spot is measured using a stereo camera including a plurality of cameras will be described. Meanwhile, it should be noted that any method may be used as long as the distance to the light spot can be measured.

In the present embodiment, each of image acquisition units 11 and 19 periodically (in a time series manner) obtains, from a pair of cameras (stereo cameras) C1 and C2 installed at the front of a vehicle, for example, an image in front of the vehicle (host vehicle), and the distance measurement unit 17 obtains a parallax image from the image photographed by each camera C1 and C2 included in the stereo camera, thereby measuring the distance to the light spot reflected on the image. The method of calculating the parallax image is a conventionally known method, and the details thereof will be omitted. In the matching of right and left images (pattern matching), features on the image are used, whereby accuracy of the distance (measurement) is difficult to obtain at nighttime or the like during which the features on the image are difficult to obtain. Although the accuracy of the distance is high when an object is in the vicinity, it is difficult to determine how close the object should exist to obtain the high accuracy as it depends on conditions such as peripheral lightness.

In view of the above, the reliability of the measurement of the distance to the light spot is measured by the distance measurement reliability determination unit 18, and only when the reliability is high, the moving amount (light spot moving amount) based on the distance measured by the distance measurement unit 17 is calculated and the calculated light spot moving amount is replaced with the light spot moving amount calculated by the reference generation unit 14 to be used.

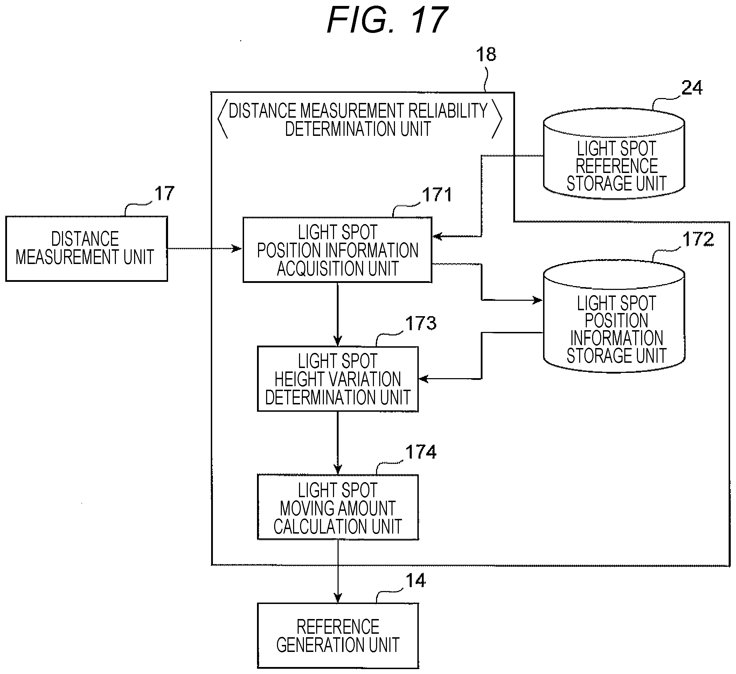

More specifically, as illustrated in FIG. 17, the distance measurement reliability determination unit 18 mainly includes a light spot position information acquisition unit 171, a light spot position information storage unit 172, a light spot height variation determination unit 173, and a light spot moving amount calculation unit 174.

The light spot position information acquisition unit 171 obtains information associated with the distance (position) of the light spot measured by the distance measurement unit 17. In this case, the distance on world coordinates (position coordinates) (X, Y, Z) measured by the distance measurement unit 17 with respect to each light spot extracted by a light-spot detection unit 12 illustrated in FIG. 1 is obtained. The light spot position information acquisition unit 171 refers to a light spot reference storage unit 24, which is a constituent element of the reference generation unit 14 illustrated in FIG. 2, and stores the obtained distance information in the light spot position information storage unit 172 in such a manner that the same light spot ID is set to the same light spot.

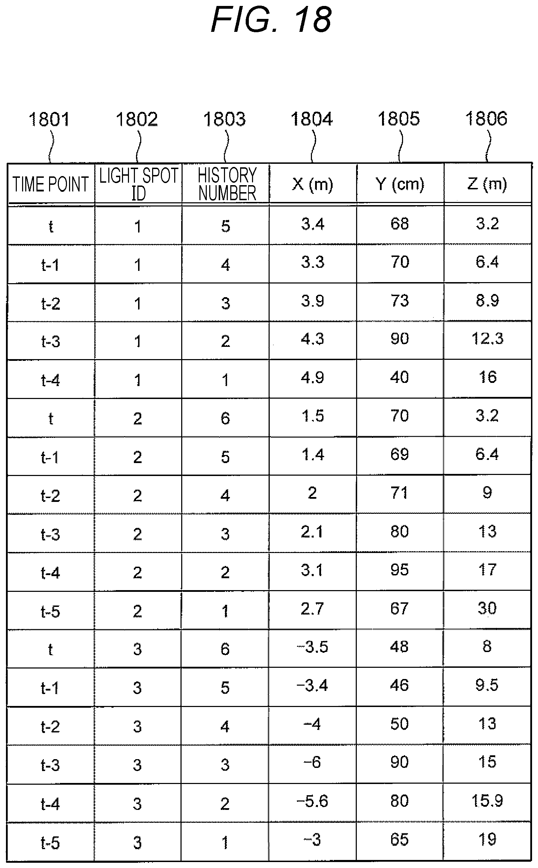

The light spot position information storage unit 172 stores world coordinate position information of the light spot obtained by the light spot position information acquisition unit 171 in association with the light spot ID tracked by the reference generation unit 14, and an example of the stored data is illustrated in FIG. 18. The information stored in the light spot reference storage unit 24 illustrated in FIGS. 10 and 12 can be collated with the same light spot on the basis of a time point in a column 1801 and a light spot ID in a column 1802 in data illustrated in FIG. 18.

The light spot height variation determination unit 173 determines stability of the distance information measured by the distance measurement unit 17 from the variation of the position information of the light spot stored in the light spot position information storage unit 172.

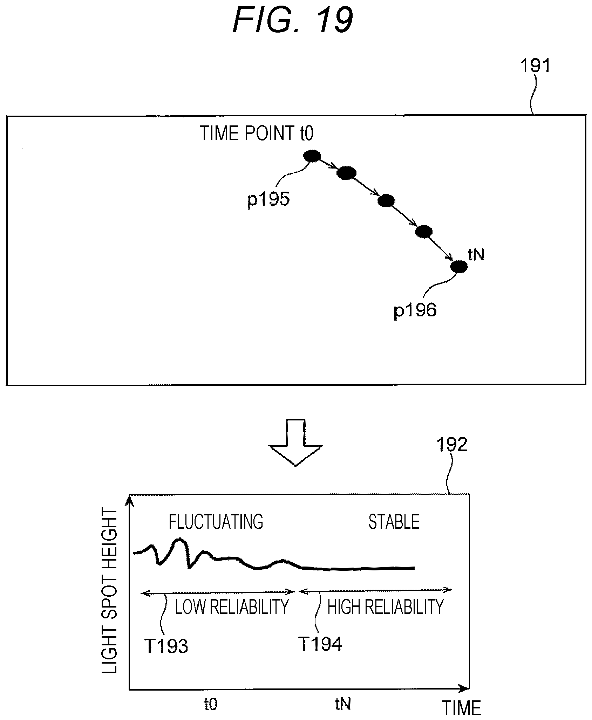

A principle of the light spot height variation determination unit 173 will be described with reference to FIG. 19. In the drawing, an image illustrating an exemplary movement of the position of the light spot is denoted by 191. Further, a position of the light spot at a time point t0 is denoted by p195, a position of the light spot at a time point tN is denoted by p196, and positions of the light spot therebetween are also illustrated in the drawing.

Although these are the same light spots as the light spots tracked by a light spot tracking unit 21 (see FIG. 2), which are originally the light spots extracted on an image at different time points, they are illustrated on the same image 191 for convenience of explanation.

The positions P195 and p196 of the light spot on the image 191 and the position of the light spot on the world coordinates between the time points are obtained by the distance measurement unit 17. At that time, a height Y of the light spot is also obtained. When the reliability of the distance measurement accuracy of the stereo camera is high, a light spot height is considered to be constant on the assumption that the road is flat and there is no slope, and even when there is a slight inclination, it is considered that the height measured by the stereo camera is not so different in a short period between the observation time points. The light spot height variation determination unit 173 of the distance measurement reliability determination unit 18 uses this and assumes that the distance measurement accuracy of the distance measurement unit 17 is high when the variation of the height of the same light spot is small, and the distance measured by the distance measurement unit 17 is used for the calculation of the light spot moving amount used in the reference generation unit 14. In a graph 192 in FIG. 19, a horizontal axis represents time, and time-series variation of the height of the tracked light spot in the image 191 is illustrated. Here, the variation of the height of the light spot is high in a period T193 illustrated in the graph 192, and the variation of the height of the light spot is low in a period T194. Accordingly, it is assumed that the reliability of the distance measurement is low in the period T193, and the distance measured by the distance measurement unit 17 during this period is not used.

Further, it is assumed that the reliability of the distance measurement is high in the period T194, and the distance measured by the distance measurement unit 17 during this period is used.

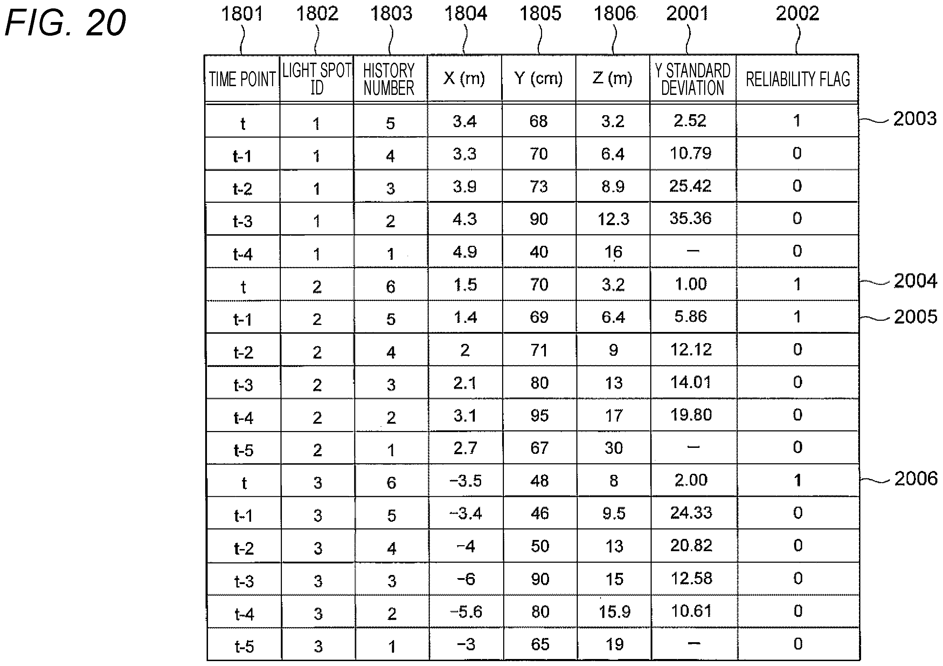

Here, as a method of determining magnitude of the variation of the light spot height, variance of the heights of the past several frames including the current time point is calculated, and when the variance is smaller than a preset threshold value, it is assumed that the variance of the heights is stable and the distance information obtained in the frame is stable, and a reliability flag is set to "1". FIG. 20 is an exemplary result of determining the reliability from the magnitude of the variation in the light spot height variation determination unit 173 with respect to the data illustrated in FIG. 18. Y standard deviation, which is an index representing the variation of the height Y, is calculated and stored in a column 2001 in FIG. 20 on the basis of the columns 1801 to 1806 in FIG. 18. In this case, the Y standard deviation in the column 2001 is calculated from the height of the light spot in three past times as an example. Further, in the present embodiment, it is assumed that the reliability is high when the standard deviation is less than 10, and the reliability is low when the standard deviation is 10 or more, as a threshold value for determining the variation of the height Y.

The result of determining the reliability of the distance measurement of the light spot at each time point using the Y standard deviation calculated in the column 2001 illustrated in FIG. 20 and the threshold value is illustrated in a column 2002. In the example illustrated in FIG. 20, the light spot in which the Y standard deviation is less than 10 and the reliability of the distance measurement is determined as high is the light spot with the light spot ID "1" at the time point t in a row 2003, the light spots with the light spot ID "2" at the time point t in rows 2004 and 2005, and the light spot with the light spot ID "3" at the time point t in a row 2006.

Although the number of data for calculating the standard deviation of the height Y is set to past three times and the threshold value of the Y standard deviation is set to 10 for convenience of explanation in the present embodiment, it is not necessarily limited to this.

The light spot moving amount calculation unit 174 illustrated in FIG. 17 calculates, when the reliability of the distance measurement is determined as high by the light spot height variation determination unit 173, the moving amount of the light spot (light spot having high distance measurement reliability) using the distance measured by the distance measurement unit 17.

Here, in order to calculate the moving amount of the light spot between the time points, the light spot moving amount calculation unit 174 uses the position of the light spot at the current time and the time of one time point period before the current time. Therefore, when the reliability flags of the light spot positions both at the current time and the time of one time period before the current time are set to "1", the moving amount of the light spot can be calculated using the distance measured by the distance measurement unit 17. In the example illustrated in FIG. 20, the moving amount is calculated in the cases with the light spot ID "2" in the rows 2004 and 2005.

The light spot moving amount calculation unit 174 obtains a light spot moving amount Lt at the time point t using the following Formula (7).

$$\Delta X_t = \left| X_t - X_{t-1} \right|$$
$$\Delta Z_t = \left| Z_t - Z_{t-1} \right|$$

$$Lt = \sqrt{\Delta Xt^2 + \Delta Zt^2} \qquad \cdots \ (7)$$

where

$\Delta Xt$: movement amount in X direction at time point t
$\Delta 2t$: movement amount in Z direction at time point t
(Mathematical Formula 7)

The light spot moving amount calculation unit 174 replaces the calculated light spot moving amount with the light spot moving amount calculated by the reference generation unit 14 (in particular, light spot moving amount calculation unit 22 in FIG. 2), and the reference generation unit 14 calculates the subsequent reference using the light spot moving amount calculated by the light spot moving amount calculation unit 174.

Then, as described above, a moving-light-spot determination unit 15 determines whether each light spot in the image detected by the light-spot detection unit 12 is a moving light spot or a stationary light spot on the basis of the reference generated by the reference generation unit 14, and a light distribution control unit 16 determines a light distribution state of a headlight of the host vehicle on the basis of a determination result (whether the detected light spot is a moving light spot or a stationary light spot) of the moving-light-spot determination unit 15.

In this manner, with the use of the environment recognition device 2 according to the present embodiment, discrimination accuracy between the stationary object (stationary light spot) and the moving object (moving light spot) can be further improved by using the distance measurement result with high reliability.

As described above, it becomes possible to efficiently discriminate whether the detected light spot is a moving light spot or a stationary light spot by applying the environment recognition devices 1 and 2 according to the first and second embodiments. Further, accuracy of the light distribution control in which the headlight of the host vehicle is switched (from the high beam) to the low beam when it is determined that light of a vehicle (other vehicle) as a moving light spot exists can be improved on the basis of the discriminated result. Furthermore, when a means for directly measuring a distance including a stereo camera and the like can be used, it is determined whether the reliability of the distance measurement is high on the basis of the variation of the height of the detected light spot, and the measured distance is used for determining the moving light spot/stationary light spot only when the reliability of the distance measurement is high, whereby the discrimination accuracy of the light spot can be further improved.

In the first and second embodiments, the exemplary case where the determination result of the moving object is used for the light distribution control, which is switching between the high beam and the low beam, has been described. Meanwhile, the determination result of the moving object can be also similarly used for shading control that controls a region irradiated with headlight, for example. In the shading control, a region in which light of a vehicle (other vehicle) exists is detected, and the region is transmitted to a control device, thereby controlling the irradiation of the headlight corresponding to the region. In this case, the irradiation of the headlight to the region can be limited by transmitting coordinates of the light spot with a moving light spot flag set to "1" to the control device.

Note that the present invention is not limited to the first and second embodiments described above, and includes various modifications. For example, the above-described embodiments have been described in detail for convenience of explaining the present invention in a manner easy to understand, and are not necessarily limited to those having all the described configurations. A configuration of one embodiment may be partially replaced with a configuration of another embodiment, and the configuration of another embodiment may be added to the configuration of one embodiment. It is also possible to add, delete, and replace other configurations with respect to a part of the configuration of each embodiment.

Moreover, each of the above-described configurations, functions, processing units, processing means, and the like may be partially or entirely implemented by hardware, for example, by designing them with an integrated circuit and the like. Each of the above-described configurations, functions, and the like may be implemented by software by interpreting and executing a program for implementing each function using a processor. Information such as a program, a table, and a file for implementing each function may be stored in a storage device such as a memory, a hard disk, and a solid state drive (SSD) or a recording medium such as an IC card, an SD card, and a DVD.

Besides, control lines and information lines are indicated using what is considered to be necessary for explanation, and all the control lines and the information lines are not necessarily illustrated for products. In practice, it may be considered that almost all the configurations are mutually connected.

Reference Signs List

| | |
|---|---|
| 1 | environment recognition device (first embodiment) |
| 2 | environment recognition device (second embodiment) |
| 11 | image acquisition unit |
| 12 | light-spot detection unit |
| 13 | host vehicle moving state acquisition unit |
| 14 | reference generation unit |
| 15 | moving-light-spot determination unit |
| 16 | light distribution control unit |
| 17 | distance measurement unit |
| 18 | distance measurement reliability determination unit |
| 19 | image acquisition unit |
| 21 | light spot tracking unit |
| 22 | light spot moving amount calculation unit |
| 23 | host vehicle moving amount calculation unit |
| 24 | light spot reference storage unit |
| 171 | light spot position information acquisition unit |
| 172 | light spot position information storage unit |
| 173 | light spot height variation determination unit |
| 174 | light spot moving amount calculation unit |
| C1 | camera |
| C2 | camera |

**EP 3 438 933 B1**

**Claims**

1. An environment recognition device, comprising:

an image acquisition unit (11) that is configured to obtain an image from a camera which generates the image by photographing;
a light-spot detection unit (12) that is configured to detect a light spot from each image photographed at a plurality of points in time using an imaging device mounted on a host vehicle;
a host vehicle moving state acquisition unit (13) that is configured to receive the moving amount of the vehicle from sensors for periodically measuring a running state of the host vehicle;
a reference generation unit (14) that is configured to generate reference for calculating the variation in positions of light spots using a position of the light spot detected from the image previously photographed by the imaging device,
wherein
the reference generation unit (14) is configured to calculate a moving amount of the light spot in a predetermined period using the position of the light spot detected from the image previously photographed by the imaging device, and is configured to generate the reference on the basis of the moving amount of the light spot in the predetermined period and a moving amount of the host vehicle in a period same as the predetermined period; and
a moving-light-spot determination unit (15) that is configured to determine, on the basis of the reference generated by the reference generation unit (14) and variation in positions of light spots determined as identical among the light spots detected from the images photographed at the plurality of points in time, whether the light spot is a light spot moving relative to a ground,
**characterized in that** the reference generation unit (14) is configured to calculate the moving amount of the light spot by setting a height of the light spot to a predetermined value and deriving three-dimensional world coordinates from screen coordinates of the light spot on the image using perspective conversion, wherein
the reference generation unit (14) is configured to generate the reference on the basis of a correlation between the moving amount of the light spot in the predetermined period and the moving amount of the host vehicle in the period same as the predetermined period, and wherein
the correlation is represented by a correlation line determined from the moving amount of the light spot in the predetermined period and the moving amount of the host vehicle in the period same as the predetermined period, and wherein the correlation with the host vehicle moving amount is maintained without setting the true value to the height at the time of converting from the screen coordinates into the world coordinates.

2. The environment recognition device according to claim 1, wherein

the reference generation unit (14) is configured to generate the reference from a ratio between the moving amount of the light spot in the predetermined period and the moving amount of the host vehicle in the period same as the predetermined period, and
the moving-light-spot determination unit (15) is configured to determine whether the light spot is a light spot moving relative to the ground on the basis of variation in the ratio.

3. The environment recognition device according to claim 1, further comprising:

a host vehicle moving state acquisition unit (13) that is configured to obtain information associated with a moving state of the host vehicle;
a reference generation unit (14) that is configured to track a light spot determined as identical from the light spot detected from the image photographed at the plurality of points in time, is configured to calculate a moving amount of the light spot in a predetermined period, calculates a moving amount of the host vehicle in a period same as the predetermined period on the basis of the information obtained by the host vehicle moving state acquisition unit (13), and is configured to generate reference for calculating variation in positions of the light spot from a correlation between the moving amount of the light spot in the predetermined period and the moving amount of the host vehicle in the period same as the predetermined period; wherein

variation in positions of the light spot is calculated on the basis of the reference.

14

**Patentansprüche**

1. Umgebungserkennungsvorrichtung, die Folgendes umfasst:

   eine Bilderfassungseinheit (11), die konfiguriert ist, ein Bild von einer Kamera zu erhalten, die das Bild durch Fotografieren erzeugt;
   eine Lichtfleck-Detektionseinheit (12), die konfiguriert ist, einen Lichtfleck in jedem Bild zu detektieren, das zu mehreren Zeitpunkten unter Verwendung einer Bildgebungsvorrichtung, die an einem Host-Fahrzeug montiert ist, fotografiert wurde;
   ein Einheit (13) zum Erfassen eines Bewegungszustands des Host-Fahrzeugs, die konfiguriert ist, den Bewegungsbetrag des Fahrzeugs von Sensoren zu erhalten, um einen Bewegungszustand des Host-Fahrzeugs periodisch zu messen;
   eine Referenzerzeugungseinheit (14), die konfiguriert ist, eine Referenz zum Berechnen der Positionsänderung von Lichtflecken unter Verwendung einer Position des Lichtflecks zu erzeugen, der in dem Bild detektiert wurde, das zuvor durch die Bildgebungsvorrichtung fotografiert wurde,
   wobei
   die Referenzerzeugungseinheit (14) konfiguriert ist, einen Bewegungsbetrag des Lichtflecks in einer festgelegten Zeitspanne unter Verwendung der Position des Lichtflecks, der in dem Bild detektiert wurde, das zuvor durch die Bildgebungsvorrichtung fotografiert wurde, zu berechnen, und konfiguriert ist, die Referenz auf der Basis des Bewegungsbetrags des Lichtflecks in der festgelegten Zeitspanne und eines Bewegungsbetrags des Host-Fahrzeugs in einer Zeitspanne, die der festgelegten Zeitspanne gleicht, zu erzeugen; und
   eine Einheit (15) zum Bestimmen eines beweglichen Lichtflecks, die konfiguriert ist, auf der Basis der Referenz, die durch die Referenzerzeugungseinheit (14) erzeugt wurde, und einer Positionsänderung von Lichtflecken, für die festgestellt wurde, dass sie unter den Lichtflecken, die in den Bildern detektiert wurden, die zu den mehreren Zeitpunkten fotografiert wurden, identisch sind, festzustellen, ob der Lichtfleck ein Lichtfleck ist, der sich relativ zum Boden bewegt,
   **dadurch gekennzeichnet, dass** die Referenzerzeugungseinheit (14) konfiguriert ist, den Bewegungsbetrag des Lichtflecks durch Einstellen einer Höhe des Lichtflecks auf einen festgelegten Wert und Ableiten von dreidimensionalen Weltkoordinaten aus Bildschirmkoordinaten des Lichtflecks in dem Bild unter Verwendung einer Perspektivenkonversion zu berechnen, wobei
   die Referenzerzeugungseinheit (14) konfiguriert ist, die Referenz auf der Basis einer Korrelation zwischen dem Bewegungsbetrag des Lichtflecks in der festgelegten Zeitspanne und dem Bewegungsbetrag des Host-Fahrzeugs in der Zeitspanne, die der festgelegten Zeitspanne gleicht, zu erzeugen, wobei
   die Korrelation durch eine Korrelationslinie repräsentiert wird, die aus dem Bewegungsbetrag des Lichtflecks in der festgelegten Zeitspanne und dem Bewegungsbetrag des Host-Fahrzeugs in der Zeitspanne, die der festgelegten Zeitspanne gleicht, bestimmt wird, und wobei
   die Korrelation mit dem Bewegungsbetrag des Host-Fahrzeugs beibehalten wird, ohne den tatsächlichen Wert zum Zeitpunkt der Umsetzung von den Bildschirmkoordinaten in die Weltkoordinaten auf die Höhe einzustellen.

2. Umgebungserkennungsvorrichtung nach Anspruch 1, wobei

   die Referenzerzeugungseinheit (14) konfiguriert ist, die Referenz aus einem Verhältnis zwischen dem Bewegungsbetrag des Lichtflecks in der festgelegten Zeitspanne und dem Bewegungsbetrag des Host-Fahrzeugs in der Zeitspanne, die der festgelegten Zeitspanne gleicht, zu erzeugen, und
   die Einheit (15) zum Bestimmen eines beweglichen Lichtflecks konfiguriert ist, auf der Basis einer Verhältnisänderung zu bestimmen, ob der Lichtfleck ein Lichtfleck ist, der sich relativ zum Boden bewegt.

3. Umgebungserkennungsvorrichtung nach Anspruch 1, die ferner Folgendes umfasst:

   eine Einheit (13) zum Erfassen eines Bewegungszustands eines Host-Fahrzeugs, die konfiguriert ist, Informationen zu erhalten, die mit einem Bewegungszustand des Host-Fahrzeugs verbunden sind;
   eine Referenzerzeugungseinheit (14), die konfiguriert ist, einen Lichtfleck, bei dem festgestellt wurde, dass er mit dem Lichtfleck identisch ist, der im Bild detektiert wurde, das zu den mehreren Zeitpunkten fotografiert wurde, nachzuverfolgen, konfiguriert ist, einen Bewegungsbetrag des Lichtflecks in einer festgelegten Zeitspanne zu berechnen, auf der Basis der Informationen, die durch die Einheit (13) zum Erfassen eines Bewegungszustands des Host-Fahrzeugs erhalten werden, einen Bewegungsbetrag des Host-Fahrzeugs in einer Zeitspanne berechnet, die der festgelegten Zeitspanne gleicht, und konfiguriert ist, eine Referenz zum Berechnen von Positionsänderungen des Lichtflecks aus einer Korrelation zwischen dem Bewegungsbetrag des Lichtflecks in der festgelegten Zeitspanne und dem Bewegungsbetrag des Host-Fahrzeugs in der Zeitspanne, die der festgelegten Zeitspanne gleicht, zu erzeugen; wobei
Positionsänderungen des Lichtflecks auf der Basis der Referenz berechnet werden.

**Revendications**

1. Dispositif de reconnaissance d'environnement, comprenant :

une unité d'acquisition d'image (11) qui est configurée pour obtenir une image depuis une caméra qui génère l'image par photographie ;
une unité de détection de point lumineux (12) qui est configurée pour détecter un point lumineux à partir de chaque image photographiée à une pluralité d'instants à l'aide d'un dispositif d'imagerie monté sur un véhicule hôte ;
une unité d'acquisition d'état de déplacement de véhicule hôte (13) qui est configurée pour recevoir l'amplitude de déplacement du véhicule depuis des capteurs destinés à mesurer périodiquement un état de fonctionnement du véhicule hôte ;
une unité de génération de référence (14) qui est configurée pour générer une référence destinée à calculer l'écart dans des positions de points lumineux à l'aide d'une position du point lumineux détecté à partir de l'image précédemment photographiée par le dispositif d'imagerie,
dans lequel
l'unité de génération de référence (14) est configurée pour calculer une amplitude déplacement du point lumineux dans une période prédéterminée à l'aide de la position du point lumineux détecté à partir de l'image précédemment photographiée par le dispositif d'imagerie, et est configurée pour générer la référence sur la base de l'amplitude de déplacement du point lumineux dans la période prédéterminée et d'une amplitude déplacement du véhicule hôte dans une même période que la période prédéterminée ; et
une unité de détermination de déplacement de point lumineux (15) qui est configurée pour déterminer, sur la base de la référence générée par l'unité de génération de référence (14) et d'une variation dans des positions de point lumineux déterminée comme identique parmi les points lumineux détectés à partir des images photographiées à la pluralité d'instants, si le point lumineux est un point lumineux en déplacement relativement à un sol, **caractérisé en ce que** l'unité de génération de référence (14) est configurée pour calculer l'amplitude de déplacement du point lumineux en fixant une hauteur du point lumineux à une valeur prédéterminée et en dérivant des coordonnées mondiales en trois dimensions à partir de coordonnées d'écran du point lumineux sur l'image à l'aide d'une conversion de perspective, dans lequel
l'unité de génération de référence (14) est configurée pour générer la référence sur la base d'une corrélation entre l'amplitude de déplacement du point lumineux dans la période prédéterminée et l'amplitude de déplacement du véhicule hôte dans la même période que la période prédéterminée, et
dans lequel
la corrélation est représentée par une ligne de corrélation déterminée à partir de l'amplitude de déplacement du point lumineux dans la période prédéterminée et de l'amplitude de déplacement du véhicule hôte dans la même période que la période prédéterminée,
et dans lequel la corrélation avec l'amplitude déplacement de véhicule hôte est maintenue sans régler la valeur réelle à la hauteur au moment de la conversion des coordonnées d'écran en coordonnées mondiales.

2. Dispositif de reconnaissance d'environnement selon la revendication 1, dans lequel

l'unité de génération de référence (14) est configurée pour générer la référence à partir d'un rapport entre l'amplitude de déplacement du point lumineux dans la période prédéterminée et l'amplitude de déplacement du véhicule hôte dans la même période que la période prédéterminée, et
l'unité de détermination de déplacement de point lumineux (15) est configurée pour déterminer si le point lumineux est un point lumineux en déplacement relativement au sol sur la base d'une variation dans le rapport.

3. Dispositif de reconnaissance d'environnement selon la revendication 1, comprenant en outre :

une unité d'acquisition d'état de déplacement de véhicule hôte (13) qui est configurée pour obtenir des informations associées à un état de déplacement du véhicule hôte ;
une unité de génération de référence (14) qui est configurée pour suivre un point lumineux déterminé comme identique par rapport au point lumineux détecté à partir de l'image photographiée à la pluralité d'instants, est configurée pour calculer une amplitude de déplacement du point lumineux dans une période prédéterminée, calculer une amplitude déplacement du véhicule hôte dans une même période que la période déterminée sur la base des informations obtenues par l'unité d'acquisition d'état de déplacement de véhicule hôte (13), et qui est configurée pour générer une référence destinée à calculer une variation dans des positions du point lumineux à partir d'une corrélation entre l'amplitude de déplacement du point lumineux dans la période prédéterminée et l'amplitude déplacement du véhicule hôte dans la même période que la période prédéterminée ; dans lequel une variation dans des positions du point lumineux est calculée sur la base de la référence.

*FIG. 1*

⟨ENVIRONMENT RECOGNITION DEVICE⟩

C1 CAMERA

11 IMAGE ACQUISITION UNIT

12 LIGHT-SPOT DETECTION UNIT

13 HOST VEHICLE MOVING STATE ACQUISITION UNIT

14 REFERENCE GENERATION UNIT

15 MOVING-LIGHT-SPOT DETERMINATION UNIT

16 LIGHT DISTRIBUTION CONTROL UNIT

1

# FIG. 2

〈REFERENCE GENERATION UNIT〉 14

LIGHT-SPOT DETECTION UNIT 12

HOST VEHICLE MOVING STATE ACQUISITION UNIT 13

LIGHT SPOT TRACKING UNIT 21

LIGHT SPOT MOVING AMOUNT CALCULATION UNIT 22

HOST VEHICLE MOVING AMOUNT CALCULATION UNIT 23

LIGHT SPOT REFERENCE STORAGE UNIT 24

MOVING-LIGHT-SPOT DETERMINATION UNIT 15

## FIG. 3

<SCREEN COORDINATE SYSTEM> 31

v 34

p301

$(u_1, v_1)$

33

u

PERSPECTIVE CONVERSION

<WORLD COORDINATE SYSTEM> 32

Y 37

p302

$(X_1, Y_1, Z_1)$

Z

38

36

X

EP 3 438 933 B1

# FIG. 4

EP 3 438 933 B1

# FIG. 5

# FIG. 6

## FIG. 7

| LIGHT SPOT | TIME POINT | u COORDINATE | v COORDINATE | HEIGHT Y=0.5 | | | HEIGHT Y=1.0 | | | HEIGHT Y=2.0 | | |
|---|---|---|---|---|---|---|---|---|---|---|---|---|
| | | | | Z COORDINATE | X COORDINATE | MOVING AMOUNT | Z COORDINATE | X COORDINATE | MOVING AMOUNT | Z COORDINATE | X COORDINATE | MOVING AMOUNT |
| p601 | t | 700 | 160 | 33.3 | 2.0 | — | 66.7 | 29.1 | — | 133.3 | 58.3 | — |
| p602 | t+1 | 701 | 170 | 23.5 | 10.3 | 12.8 | 47.1 | 20.6 | 21.4 | 94.1 | 41.2 | 42.7 |
| p603 | t+2 | 705 | 185 | 16.3 | 5.6 | 8.6 | 32.7 | 13.7 | 16.0 | 65.3 | 26.1 | 32.6 |
| p604 | t+3 | 708 | 205 | 11.6 | 3.9 | 5.0 | 23.2 | 9.9 | 10.2 | 46.4 | 19.2 | 20.1 |
| p605 | t+4 | 709 | 230 | 8.5 | 2.8 | 3.3 | 17.0 | 7.4 | 6.7 | 34.0 | 14.4 | 13.2 |
| p606 | t+5 | 710 | 250 | 7.0 | 2.2 | 1.6 | 14.0 | 6.1 | 3.2 | 28.1 | 12.0 | 6.4 |
| p607 | t+6 | 715 | 300 | 4.9 | 1.4 | 0.7 | 9.8 | 4.3 | 1.5 | 19.5 | 8.5 | 2.9 |

701  702  703  704  705  706  707  708  709  710  711  712

EP 3 438 933 B1

## FIG. 8

# FIG. 9

HOST VEHICLE MOVING AMOUNT

# FIG. 10

| TIME POINT | LIGHT SPOT ID | HISTORY NUMBER | REFERENCE | |
|:---:|:---:|:---:|:---:|:---:|
| 1001 | 1002 | 1003 | 1004 | |
| t | 1 | 5 | 5.82 | ~1005 |
| t-1 | 1 | 4 | 5.73 | ~1006 |
| t-2 | 1 | 3 | 7.03 | ~1007 |
| t-3 | 1 | 2 | 8.54 | ~1008 |
| t-4 | 1 | 1 | 10.37 | ~1009 |
| t | 2 | 6 | 2.27 | ~1010 |
| t-1 | 2 | 5 | 2.97 | ~1011 |
| t-2 | 2 | 4 | 6.17 | ~1012 |
| t-3 | 2 | 3 | 6.07 | ~1013 |
| t-4 | 2 | 2 | 6.88 | ~1014 |
| t-5 | 2 | 1 | 7.91 | ~1015 |
| t | 3 | 6 | 0.32 | ~1016 |
| t-1 | 3 | 5 | 0.31 | ~1017 |
| t-2 | 3 | 4 | 0.37 | ~1018 |
| t-3 | 3 | 3 | 0.40 | ~1019 |
| t-4 | 3 | 2 | 0.35 | ~1020 |
| t-5 | 3 | 1 | 0.56 | ~1021 |

# FIG. 11

# FIG. 12

| TIME POINT | LIGHT SPOT ID | HISTORY NUMBER | REFERENCE | VARIANCE | MOVING LIGHT SPOT FLAG | |
|---|---|---|---|---|---|---|
| t | 1 | 5 | 5.82 | 3.87 | 1 | 1207 |
| t-1 | 1 | 4 | 5.73 | 3.99 | 1 | |
| t-2 | 1 | 3 | 7.03 | 2.79 | 1 | |
| t-3 | 1 | 2 | 8.54 | 1.67 | 1 | |
| t-4 | 1 | 1 | 10.37 | — | — | |
| t | 2 | 6 | 2.27 | 5.05 | 1 | 1208 |
| t-1 | 2 | 5 | 2.97 | 3.41 | 1 | |
| t-2 | 2 | 4 | 6.17 | 0.72 | 1 | |
| t-3 | 2 | 3 | 6.07 | 0.85 | 1 | |
| t-4 | 2 | 2 | 6.88 | 0.53 | 1 | |
| t-5 | 2 | 1 | 7.91 | — | — | |
| t | 3 | 6 | 0.32 | 0.01 | 0 | 1209 |
| t-1 | 3 | 5 | 0.31 | 0.01 | 0 | |
| t-2 | 3 | 4 | 0.37 | 0.01 | 0 | |
| t-3 | 3 | 3 | 0.40 | 0.01 | 0 | |
| t-4 | 3 | 2 | 0.35 | 0.02 | 0 | |
| t-5 | 3 | 1 | 0.56 | — | — | |

Column references: 1201 (TIME POINT), 1202 (LIGHT SPOT ID), 1203 (HISTORY NUMBER), 1204 (REFERENCE), 1205 (VARIANCE), 1206 (MOVING LIGHT SPOT FLAG)

## FIG. 13

## FIG. 14

# FIG. 15

| TIME POINT | LIGHT SPOT ID | HISTORY NUMBER | REFERENCE | VARIANCE | MOVING LIGHT SPOT FLAG | |
|---|---|---|---|---|---|---|
| t | 1 | 5 | 5.82 | 3.87 | 1 | |
| t-1 | 1 | 4 | 5.73 | 3.99 | 1 | |
| t-2 | 1 | 3 | 7.03 | 2.79 | 1 | |
| t-3 | 1 | 2 | 8.54 | 1.67 | 1 | |
| t-4 | 1 | 1 | 10.37 | — | — | |
| t | 2 | 6 | 2.27 | 5.05 | 1 | |
| t-1 | 2 | 5 | 2.97 | 3.41 | 1 | |
| t-2 | 2 | 4 | 6.17 | 0.72 | 1 | |
| t-3 | 2 | 3 | 6.07 | 0.85 | 1 | |
| t-4 | 2 | 2 | 6.88 | 0.53 | 1 | |
| t-5 | 2 | 1 | 7.91 | — | — | |
| t+1 | 3 | 7 | 0.30 | 0.01 | 0 | ⌐1501 |
| t | 3 | 6 | 0.32 | 0.01 | 0 | |
| t-1 | 3 | 5 | 0.31 | 0.01 | 0 | |
| t-2 | 3 | 4 | 0.37 | 0.01 | 0 | |
| t-3 | 3 | 3 | 0.40 | 0.01 | 0 | |
| t-4 | 3 | 2 | 0.35 | 0.02 | 0 | |
| t-5 | 3 | 1 | 0.56 | — | — | |

*FIG. 16*

⟨ENVIRONMENT RECOGNITION DEVICE⟩ 2

C1 CAMERA → IMAGE ACQUISITION UNIT 11 → LIGHT-SPOT DETECTION UNIT 12

C2 CAMERA → IMAGE ACQUISITION UNIT 19

IMAGE ACQUISITION UNIT 11, 19 → DISTANCE MEASUREMENT UNIT 17 → DISTANCE MEASUREMENT RELIABILITY DETERMINATION UNIT 18 → REFERENCE GENERATION UNIT 14

HOST VEHICLE MOVING STATE ACQUISITION UNIT 13 → REFERENCE GENERATION UNIT 14

REFERENCE GENERATION UNIT 14 → MOVING-LIGHT-SPOT DETERMINATION UNIT 15 → LIGHT DISTRIBUTION CONTROL UNIT 16

FIG. 17

# FIG. 18

| TIME POINT | LIGHT SPOT ID | HISTORY NUMBER | X (m) | Y (cm) | Z (m) |
|---|---|---|---|---|---|
| 1801 | 1802 | 1803 | 1804 | 1805 | 1806 |
| t | 1 | 5 | 3.4 | 68 | 3.2 |
| t-1 | 1 | 4 | 3.3 | 70 | 6.4 |
| t-2 | 1 | 3 | 3.9 | 73 | 8.9 |
| t-3 | 1 | 2 | 4.3 | 90 | 12.3 |
| t-4 | 1 | 1 | 4.9 | 40 | 16 |
| t | 2 | 6 | 1.5 | 70 | 3.2 |
| t-1 | 2 | 5 | 1.4 | 69 | 6.4 |
| t-2 | 2 | 4 | 2 | 71 | 9 |
| t-3 | 2 | 3 | 2.1 | 80 | 13 |
| t-4 | 2 | 2 | 3.1 | 95 | 17 |
| t-5 | 2 | 1 | 2.7 | 67 | 30 |
| t | 3 | 6 | -3.5 | 48 | 8 |
| t-1 | 3 | 5 | -3.4 | 46 | 9.5 |
| t-2 | 3 | 4 | -4 | 50 | 13 |
| t-3 | 3 | 3 | -6 | 90 | 15 |
| t-4 | 3 | 2 | -5.6 | 80 | 15.9 |
| t-5 | 3 | 1 | -3 | 65 | 19 |

# FIG. 19

191

TIME POINT t0

p195

tN

p196

192

FLUCTUATING          STABLE

LIGHT SPOT HEIGHT

LOW RELIABILITY     HIGH RELIABILITY

T193                T194

t0              tN          TIME

*FIG. 20*

| TIME POINT | LIGHT SPOT ID | HISTORY NUMBER | X (m) | Y (cm) | Z (m) | Y STANDARD DEVIATION | RELIABILITY FLAG |
|---|---|---|---|---|---|---|---|
| t | 1 | 5 | 3.4 | 68 | 3.2 | 2.52 | 1 |
| t-1 | 1 | 4 | 3.3 | 70 | 6.4 | 10.79 | 0 |
| t-2 | 1 | 3 | 3.9 | 73 | 8.9 | 25.42 | 0 |
| t-3 | 1 | 2 | 4.3 | 90 | 12.3 | 35.36 | 0 |
| t-4 | 1 | 1 | 4.9 | 40 | 16 | — | 0 |
| t | 2 | 6 | 1.5 | 70 | 3.2 | 1.00 | 1 |
| t-1 | 2 | 5 | 1.4 | 69 | 6.4 | 5.86 | 1 |
| t-2 | 2 | 4 | 2 | 71 | 9 | 12.12 | 0 |
| t-3 | 2 | 3 | 2.1 | 80 | 13 | 14.01 | 0 |
| t-4 | 2 | 2 | 3.1 | 95 | 17 | 19.80 | 0 |
| t-5 | 2 | 1 | 2.7 | 67 | 30 | — | 0 |
| t | 3 | 6 | −3.5 | 48 | 8 | 2.00 | 1 |
| t-1 | 3 | 5 | −3.4 | 46 | 9.5 | 24.33 | 0 |
| t-2 | 3 | 4 | −4 | 50 | 13 | 20.82 | 0 |
| t-3 | 3 | 3 | −6 | 90 | 15 | 12.58 | 0 |
| t-4 | 3 | 2 | −5.6 | 80 | 15.9 | 10.61 | 0 |
| t-5 | 3 | 1 | −3 | 65 | 19 | — | 0 |

EP 3 438 933 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2575078 A2
- US 2010289632 A1

- JP 5320331 B